# EUROPEAN PATENT APPLICATION

(11) **EP 1 926 263 A2**
(43) Date of publication of application: **28.05.2008**
(21) Application number: 07380324.9
(22) Date of filing: 22.11.2007
(51) Int. Cl.: H04L 12/56

(54) **Access control system for controlling the access of a user of mobile equipment to an enclosure.**

(30) Priority: 23.11.2006 ES 200602996
(71) Applicant: Vodafone Group PLC, Newbury Berkshire RG14 2FN (GB); Vodafone España, S.A., 28108 Alcobendas (ES)
(72) Inventor: Cajigas Bringas, Guillermo, 28030 Madrid (ES); Marin Garcia, Franciisco José, 28006 Alcala de Henares (ES); Touset Rios, Miguel Angel, 28025 Madrid (ES)
(74) Representative: Carvajal y Urquijo, Isabel

(57) **Abstract**

The invention relates to an access control system for controlling the access of a user of mobile equipment (10) to an enclosure (100) with an access element (30) for accessing same. The system comprises a beacon equipment (20) to define a certain area around said access element, including a device with wireless access to a mobile telephony network (40), a first smart card with a user identification module unmistakably identifying the beacon equipment for the mobile telephony network, a list of identifiers provided by the mobile telephony network, and control means of the access element (30). The mobile equipment (10) includes a second smart card with a user identification module and authentication and security mechanism management means. The system further comprises local identification means to identify the mobile equipment (10) in the beacon equipment.

## Description

### Field of the Invention

The present invention is comprised within the mobile telecommunications field and more specifically in an access control system based on location by means of local area radio access technology -such as Bluetooth-, and mobile telephony.

### Background of the Invention

In the telecommunications field it is known that when a user of mobile equipment wishes to connect to a mobile network, he or she must go through mobile network algorithms for his or her authentication in such mobile network.

In addition, current access or entry control systems for controlling the access or entry to a certain enclosure or place do not interact with the mobile network.

In other words, mobile equipment working in a mobile network is currently not being used to open access elements for accessing enclosures or areas or to facilitate managing the presence in reduced geographical areas.

It is known that abbreviations and acronyms are frequently used in the mobile telephony field. A glossary of acronyms/ terms that are used throughout the present specification is shown below:
GSM Global System for Mobile Communications
SMS Short Message Service
SMSC Short Message Service Centre
UMTS Universal Mobile Telecommunications System
WiFi Wireless Fidelity

### Description of the Invention

The invention relates to an access control system for controlling the access of a user of mobile equipment to a certain enclosure according to claim 1. Preferred embodiments of the system are defined in the dependent claims.

The present invention provides an access control system based on mobile telephony and on Bluetooth type local radio access technology. The access control system of the invention allows locating and identifying a user of a mobile terminal near the access element for accessing a certain enclosure or place and giving such user access or not.

An authentication system based on Bluetooth location elements is proposed, integrating the authentication processes already existing in the mobile network.

According to a first aspect of the invention, it relates to an access control system for controlling the access of a user of mobile equipment to an enclosure with an access element for accessing same. The system comprises:
- beacon equipment to define a certain area around said access element, including:
   - a device with short range radio technology configured to define said certain area,
   - a device with wireless access to a mobile telephony network with SMS message transmission, generation and reception capacity,
   - a first smart card with a user identification module unmistakably identifying the beacon equipment for the mobile telephony network,
   - a list of identifiers provided by the mobile telephony network, and
   - control means of said access element,
   and the mobile equipment includes:
   - said short range radio technology,
   - a second smart card with a user identification module, and
   - location management means based on said short range radio technology
      and authentication and security mechanism management means,
the system further comprises:
- local identification means to identify said mobile equipment in the beacon equipment by checking if said mobile equipment is in said list of identifiers provided in the beacon equipment;
- said beacon equipment being configured to generate a first verification element, and to send said first verification element to the mobile telephony network;
- the mobile telephony network, in response to receiving said first verification element, being configured to:
   - activate its authentication mechanisms, and
   - generate a second verification element and send it to the mobile equipment;
- said mobile equipment being configured to send said second verification element by means of said short range radio technology to the beacon equipment;
- and the beacon equipment being configured to:
   - receive said second verification element, and
   - if there is a coincidence between said second verification element received and first verification element generated, give the order to said control means of the access element to open said access element.

Short range radio technology is understood to be any radio technology the useful range of which is comprised in the range of centimeters to a maximum of several hundred meters.

In other words, by means of the present invention, a system is proposed in which the mobile is provided with a novel use: as an electronic key for managing the access to an enclosure.

Said first and second verification elements are preferably sent encrypted, and for this purpose, the beacon equipment and the mobile telephony network share the corresponding keys and algorithms.

According to a preferred embodiment, said first and second verification elements include time information, a mobile equipment identifier and a beacon equipment identifier.

### Brief Description of the Drawings

A drawing aiding in better understanding the invention and expressly relating to an embodiment of said invention, which is set forth as a non limiting example thereof, is very briefly described below.

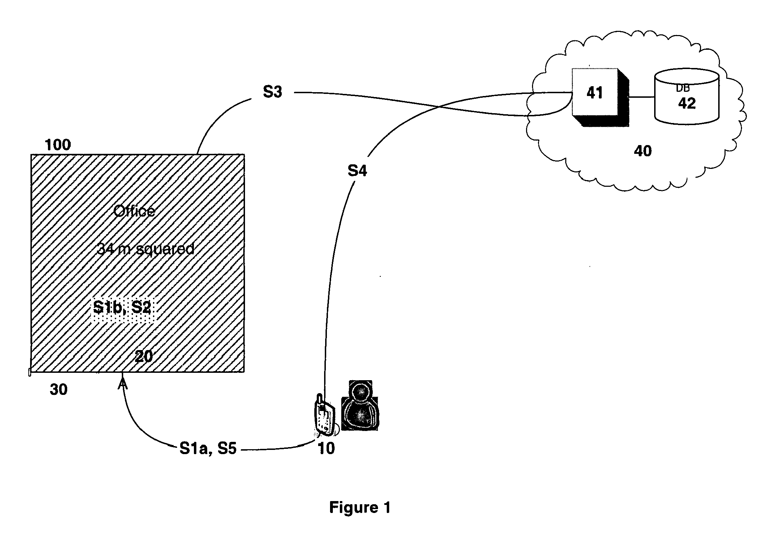

Figure 1 schematically shows the operation of the access control system of the invention and the main elements involved therein.

### Description of a Preferred Embodiment of the Invention

Figure 1 shows the enclosure or place 100 to which the access by the users of a mobile terminal is to be controlled; this enclosure can be the house of said user or his or her office, for example. This enclosure has an access element or door 30 for accessing same.

An area around the access element is defined by means of a Bluetooth beacon 20 (or it could also be defined with any local area radio access, such as WiFi) with its corresponding antenna. The range of the local radio access determines the extension of that certain area around the access element to be controlled; in the event of using Bluetooth, it will depend on the type of Bluetooth used.

The Bluetooth beacon provides the functionality of locating the user in the environment of the access element or door to be controlled. To that end, the beacon equipment has a list of users that can access it; i.e. the beacon equipment 20 has a list of identifiers supplied by unidentified routes.

This beacon 20 further contains a mobile telephone capable of sending and receiving short messages. And it controls the access element or door 30.

In order to make the system of the invention work, it is necessary that the mobile terminal or terminals that wish to access the enclosure have the following functionalities:
- Bluetooth (or the local area access technology that has been included in the beacon equipment).
- A specific piece of software managing both the location based on Bluetooth and the possible authentication and security mechanisms.

The user is thus authenticated for the system by means of the mobile terminal.

Another system element shown in Figure 1 is the mobile network 40, which is the support element of the authentication mechanisms based on a mobile terminal-network, as well as the element responsible for sending messages between the different previous elements. It incorporates an information supply element 41, as well as user, beacon, identifier and key databases 42.

The process of opening the door according to the preferred embodiment of the invention is as follows:
(S1) Local Identification: the user approaches the door in which there is an active Bluetooth beacon. Then:
   (a) it is checked if the user's mobile is enabled for this type of service (door control); and
   (b) it is checked if the user is registered in the local base of users authorized to pass this control; this database or list is supplied, remotely through the mobile terminal, for example. Verification is carried out on the base of identifiers whereby the software of the user terminal has been supplied through SMS by the supply element of the mobile network.
   In other words, the purpose is to know if the beacon identifies the mobile as an element which can access the "open door" service -it can identify other mobiles and not even recognize that it can offer them the service of opening the door-, and in such case the beacon identifies/authorizes said mobile terminal having access to the service.
(S2) Generation of a temporary ticket: when the presence of the user has been detected and has been locally authorized, the beacon generates a first ticket including information about:
   i. The beacon identifier.
   ii. The user or mobile terminal identifier.
   iii. Time information (to the second).
(S3) The beacon encrypts said ticket and sends it through SMS to an access control service server or node housing the access control service; it is a node of the mobile network but in the service layer (not any typical one of the mobile network architecture). Upon receiving it, such node searches for the number of the mobile terminal registered for that user according to the identifier. It checks the permissions again for that user in the global databases housed in the network.
(S4) Said node housing the access control service generates a short SMS message, this SMS comprises a temporary ticket valid for the next 20 seconds containing time information as well as the beacon and the mobile terminal identifier. This message is sent encrypted to the mobile telephone of the user by means of the typical elements of the SMSC mobile network architecture.
(S5) Upon receiving the message, the mobile terminal of the user identifies it and sends it through Bluetooth to the beacon.
(S6) The beacon receives and deciphers it. If the time period, the beacon identifier and the user identifier coincide with the pending request, the beacon gives the order to open the door.

In other words, the process could be summarized as follows: the beacon informs the mobile network that it has a user X who wishes to enter an enclosure, i.e. the corresponding ticket is sent from the beacon to the network. The mobile network, having the beacon and user perfectly identified by other routes, generates a ticket which it sends to the mobile terminal of the user. The mobile sends the ticket - credential- to the beacon by means of (short range) Bluetooth; the beacon deciphers it -for which it shares keys and algorithms with the network-, and if what comes out of the credential (user identifier, beacon identifier and time period) coincides with what it has -previously obtained from the user- it allows the user to pass into the enclosure. The mobile terminal does not decipher the ticket, it only passes it and the ticket reaches it from the mobile network having the beacon and mobile terminal perfectly identified, by typical authentication mechanisms/means of the mobile network.

## Claims

1. An access control system for controlling the access of a user of mobile equipment (10) within an enclosure (100) with an access element (30) for accessing same, **characterized in that** it comprises:
- a beacon equipment (20) to define a certain area around said access element, including:
- a device with short range radio technology configured to define said certain area,
- a device with wireless access to a mobile telephony network (40) with SMS message transmission, generation and reception capacity,
- a first smart card with a user identification module unmistakably identifying the beacon equipment for the mobile telephony network,
- a list of identifiers provided by the mobile telephony network, and
- control means of said access element (30),
and **in that** the mobile equipment (10) includes:
- said short range radio technology,
- a second smart card with a user identification module, and
- location management means based on said short range radio technology and authentication and security mechanism management means,
the system further comprises:
- local identification means to identify said mobile equipment in the beacon equipment by checking if said mobile equipment is in said list of identifiers provided in the beacon equipment;
- said beacon equipment being configured to generate a first verification element, and to send said first verification element to the mobile telephony network;
- the mobile telephony network, in response to receiving said first verification element, being configured to:
- activate its authentication mechanisms, and
- generate a second verification element and send it to the mobile equipment,
- said mobile equipment being configured to send said second verification element by means of said short range radio technology to the beacon equipment;
- and the beacon equipment being configured to:
- receive said second verification element, and
- if there is a coincidence between said second verification element received and first verification element generated, give the order to said control means of the access element to open said access element.

2. A system according to claim 1, **characterized in that** said first and second verification elements are sent encrypted and the beacon equipment and the mobile telephony network share the corresponding keys and algorithms.

3. A system according to any of the previous claims, **characterized in that** said first and second verification elements include time information, a mobile equipment identifier and a beacon equipment identifier.
